# EUROPEAN PATENT APPLICATION

(11) **EP 4 528 214 A1**
(43) Date of publication of application: **26.03.2025**
(21) Application number: 22942663.0
(22) Date of filing: 18.05.2022
(51) Int. Cl.: G01B 11/02, G01B 11/24

(54) **DEVICE AND METHOD FOR MEASURING ROD-SHAPED ARTICLE, AND DEVICE AND METHOD FOR MANUFACTURING ROD-SHAPED ARTICLE**

(71) Applicant: Japan Tobacco Inc., Tokyo 105-6927 (JP)
(72) Inventor: NAKAMURA, Satoshi, Tokyo 130-8603 (JP); OKAMOTO, Hiroshi, Tokyo 130-8603 (JP); ONODERA, Naoyuki, Tokyo 130-8603 (JP); HORIKAWA, Shozo, Tokyo 130-8603 (JP)
(74) Representative: Hoffmann Eitle
(86) International application number: PCT/JP2022/020661
(87) International publication number: WO 2023/223458

(57) **Abstract**

This measurement device (6) for measuring the outer circumferential length (L) of a rod-shaped article (2) in a transportation section (4) for the rod-shaped article (2) comprises a camera (20) for imaging an end surface (2c) of the rod-shaped article (2), and an image processing unit (26) for processing a captured image imaged by the camera (20) to calculate the outer circumferential length (L). The image processing unit (26) identifies the outer circumferential edge (30) of the end surface (2c) in the captured image, creates an imaginary circle (36) on the basis of the outer circumferential edge (30), creates n straight lines (38) passing through the center point (Pc) of the imaginary circle (36), identifies two intersections (40) at which each respective straight line (40) and the outer circumferential edge (30) intersect, measures the inter-intersection distances (C) between intersections (40) that are mutually adjacent on the outer circumferential edge (30), and adds up the inter-intersection distances (C) measured along the entire circumference of the outer circumferential edge (30) to calculate the outer circumferential length (L).

## Description

### Technical Field

The present invention relates to rod-shaped-article measurement devices, rod-shaped-article measurement methods, rod-shaped-article manufacturing apparatuses, and rod-shaped-article manufacturing methods and, more particularly, to a measurement device, a measurement method, a rod-shaped-article manufacturing apparatus, and a rod-shaped-article manufacturing method with which an outer circumference of a rod-shaped article that is being transported can be measured in real time.

### Background Art

Rod-shaped articles, such as cigarettes, need to be continuously monitored to ensure quality. The articles that are being transported are randomly sampled and tested for various physical properties to meet predetermined quality standards. According to PTL 1, changes in the properties of the articles being manufactured are monitored in real time. The physical properties include the average outer circumferences of the articles obtained by measuring the diameters of the articles (see paraph 0169 of PTL 1).

However, PTL 1 does not describe means by which the outer circumferences of the rod-shaped articles being transported are calculated and measured in real time. The measuring means may involve irradiation of the articles that are continuously transported in the longitudinal direction thereof with laser light in a direction perpendicular to the axial direction of the articles. In this case, the width of a laser-light-blocking region is detected as the diameter of the articles, and the outer circumference is determined from the diameter. A laser emitter and a laser receiver of a laser device are repeatedly turned rightward and leftward in a reciprocating motion by 360° with the axis of the articles at the center. For example, the diameter of the articles is measured at 480 locations during one reciprocation in about 2.4 seconds, and the average outer circumference of the articles is calculated from the average diameter of the articles.

Another measuring means may involve the installation of a chamber having a through hole with an inside diameter slightly greater than the diameter of the articles in a transport path along which the articles are continuously transported in the longitudinal direction thereof. In this case, the outer circumference of the articles is calculated based on the ventilation resistance and the pressure drop caused by the gap between the articles and the through hole when the articles pass through the through hole in the chamber.

### Citation List

### Patent Literature

PTL 1: Japanese Unexamined Patent Application Publication (Translation of PCT Application) No. 2006-522928

### Summary of Invention

### Technical Problem

When the laser device and the chamber described above are newly installed in the existing transport path, extensive and costly modification of the existing equipment is required to provide an installation space. In addition, when, for example, the articles have projections and recesses on the surfaces thereof, the recesses are not projected onto the laser receiver in the case where the laser device is used. When the chamber is used, the ventilation resistance and the pressure drop vary due to the projections and recesses. Therefore, the measured diameter of the articles may include measurement errors.

The present invention has been made in light of the above-described problems, and an object of the present invention is to provide a rod-shaped-article measurement device, a rod-shaped-article measurement method, a rod-shaped-article manufacturing apparatus, and a rod-shaped-article manufacturing method with which an outer circumference of a rod-shaped article can be easily and accurately measured in real time.

### Solution to Problem

To achieve the above-described object, a rod-shaped-article measurement device according to the present invention is a measurement device for measuring an outer circumference of a rod-shaped article in a transport section in which the rod-shaped article is transported and includes a camera that captures an image of an end surface of the rod-shaped article; and an image processing unit that calculates the outer circumference by processing the image captured by the camera. The image processing unit identifies an outer circumferential edge of the end surface in the captured image, creates an imaginary circle based on the outer circumferential edge, creates n straight lines passing through a center point of the imaginary circle, identifies two intersections at which each of the straight lines crosses the outer circumferential edge, measures distances between the intersections adjacent to each other on the outer circumferential edge, and calculates the outer circumference by adding the distances between the intersections measured along an entire circumference of the outer circumferential edge.

A rod-shaped-article measurement method according to the present invention is a measurement method for measuring an outer circumference of a rod-shaped article in a transport section in which the rod-shaped article is transported and includes an imaging step of capturing an image of an end surface of the rod-shaped article; and an image processing step of calculating the outer circumference by processing the image captured in the imaging step. The image processing step includes an edge identification process of identifying an outer circumferential edge of the end surface in the captured image, an intersection identification process of creating an imaginary circle based on the outer circumferential edge, creating n straight lines passing through a center point of the imaginary circle, and identifying two intersections at which each of the straight lines crosses the outer circumferential edge, and an adding process of measuring distances between the intersections adjacent to each other on the outer circumferential edge and calculating the outer circumference by adding the distances between the intersections measured along an entire circumference of the outer circumferential edge.

A rod-shaped-article manufacturing apparatus according to the present invention includes the above-described measurement device and a post-processing section to which the rod-shaped article transported through the transport section is transported. The post-processing section is electrically connected to the measurement device and includes a removing unit that removes the rod-shaped article for which the abnormal output has been issued.

A rod-shaped-article manufacturing method according to the present invention includes performing the above-described measurement method and a removing step of removing the rod-shaped article for which the abnormal output has been issued in a post-processing section to which the rod-shaped article transported through the transport section is transported.

### Advantageous Effects of Invention

According to the measurement device, the measurement method, the rod-shaped-article manufacturing apparatus, and the rod-shaped-article manufacturing method described above, the outer circumference of the rod-shaped article can be easily and accurately measured in real time. Brief Description of Drawings
[Fig. 1] Fig. 1 is a schematic diagram of a rod-shaped-article manufacturing apparatus and a rod-shaped-article measurement device.
[Fig. 2] Fig. 2 is a schematic perspective view of a transport drum.
[Fig. 3] Fig. 3 illustrates an actual image captured by a camera.
[Fig. 4] Fig. 4 is a conceptual diagram illustrating a process of measuring a rod-shaped article.
[Fig. 5] Fig. 5 is a flowchart of the process of measuring the rod-shaped article performed by the measurement device.

### Description of Embodiments

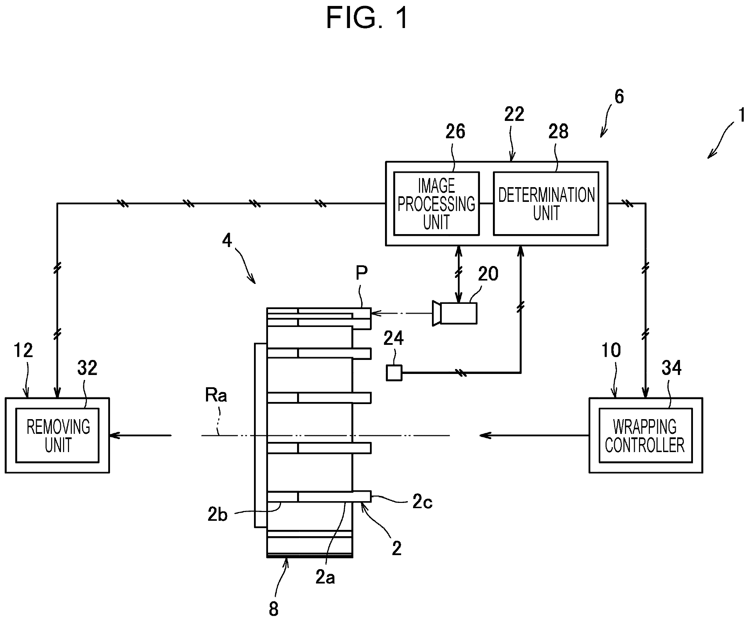

Fig. 1 is a schematic diagram of a rod-shaped-article manufacturing apparatus and a rod-shaped-article measurement device. A manufacturing apparatus 1 includes a transport section 4 for rod-shaped articles (hereinafter simply referred to as articles) 2. A measurement device 6 for the articles 2 is disposed in the transport section 4. The measurement device 6 measures an outer circumference L of each article 2 in the transport section 4. The transport section 4 includes a row of transport drums between which the articles 2 are transferred. Fig. 1 illustrates a transport drum 8, which is one of the transport drums.

Each article 2 is, for example, a cigarette including a tobacco portion 2a and a filter portion 2b. The manufacturing apparatus 1 includes a wrapping section 10 disposed upstream of the transport section 4. In the wrapping section 10, the tobacco portion 2a and the filter portion 2b, which are components of each article 2 that are separately manufactured, are wrapped with wrapping paper to form the article 2. The manufactured articles 2 are transported in a circumferential direction of the transport drum 8 and supplied to a post-processing section 12, in which the manufactured articles 2 are packed, for example, and shipped. The post-processing section 12 includes a section in which the articles 2 are cut to a predetermined length and then connected to filter portions by a filter attachment mechanism (not illustrated) to form cigarettes or the like.

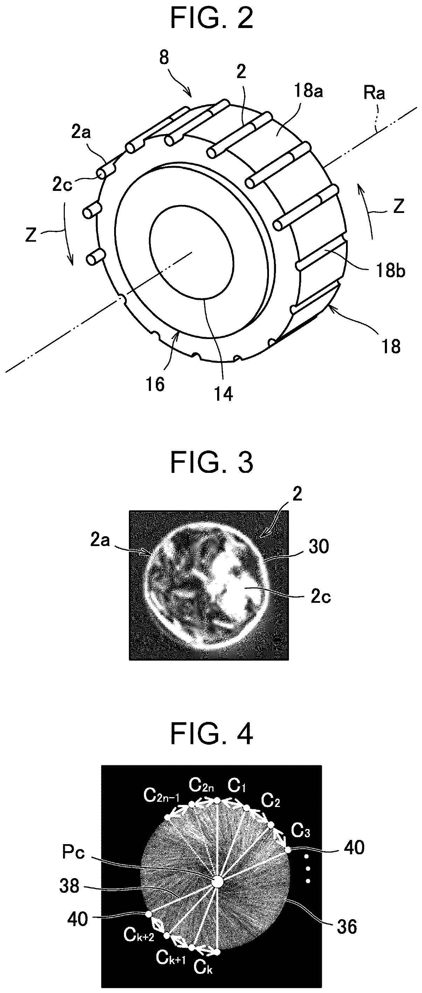

Fig. 2 is a schematic perspective view of the transport drum 8. The transport drum 8 includes a cylindrical core 16 in which a suction source 14 is disposed and a drum shell 18 that covers the cylindrical core 16. The drum shell 18 is disposed such that the drum shell 18 is rotatable about a rotational axis Ra relative to the cylindrical core 16. The drum shell 18 has an outer circumferential surface 18a on which many holding grooves 18b for holding the articles 2 are arranged in a circumferential direction Z. The suction source 14 applies a suction to each of the holding grooves 18b.

The drum shell 18 transports the articles 2 in the circumferential direction Z while the articles 2 are held in the holding grooves 18b in the outer circumferential surface 18a of the drum shell 18 by the suction applied by the suction source 14 such that the axial direction of each article 2 is parallel to the rotational axis Ra. At this time, the articles 2 are held in the holding grooves 18b of the drum shell 18 such that an end surface 2c of the tobacco portion 2a of each article 2 protrudes outward from the drum shell 18 in the direction of the rotational axis Ra. In other words, the length of each article 2 in the axial direction is greater than the length of the drum shell 18 in the direction of the rotational axis Ra.

As illustrated in Fig. 1, the measurement device 6 includes a camera 20, a control unit 22, and a sensor 24. The camera 20 and the sensor 24 are electrically connected to the control unit 22. The camera 20 is disposed outside the transport drum 8 along the rotational axis Ra, and captures an image of the end surface 2c of the tobacco portion 2a of each article 2. The sensor 24 detects the article 2 when the article 2 is transported into the transport section 4, and outputs an imaging start signal to the control unit 22.

In response to the imaging start signal, the camera 20 captures an image of the end surface 2c at the time when the article 2 to be measured that has been transported into the transport section 4 is transported to the imaging position P. The control unit 22 includes an image processing unit 26 and a determination unit 28. The image processing unit 26 processes the image captured by the camera 20 to calculate the outer circumference L of the article 2. The determination unit 28 determines whether or not the outer circumference L calculated by the image processing unit 26 is within a predetermined threshold range. Although not illustrated, the measurement device 6 may include an illumination unit that illuminates the end surface 2c in an illumination direction that is the same as an imaging direction of the camera 20. The measurement device 6 may also include a display that displays the image captured by the camera 20.

Fig. 3 illustrates an actual image captured by the camera 20. The image processing unit 26 processes the captured image to identify the outer circumferential edge 30 of the end surface 2c of the tobacco portion 2a of the article 2, that is, the cross-section of the wrapping paper. The post-processing section 12, to which the article 2 fed from the wrapping section 10 is transported through the transport section 4, is electrically connected to the measurement device 6, and includes a removing unit 32. The removing unit 32 removes the article 2 for which an abnormal output is issued. The wrapping section 10 is electrically connected to the measurement device 6, and includes a wrapping controller 34. When an abnormal output is issued for the article 2, the wrapping controller 34 controls wrapping conditions for the article 2 so that the outer circumference L calculated by the image processing unit 26 falls within the above-described threshold range.

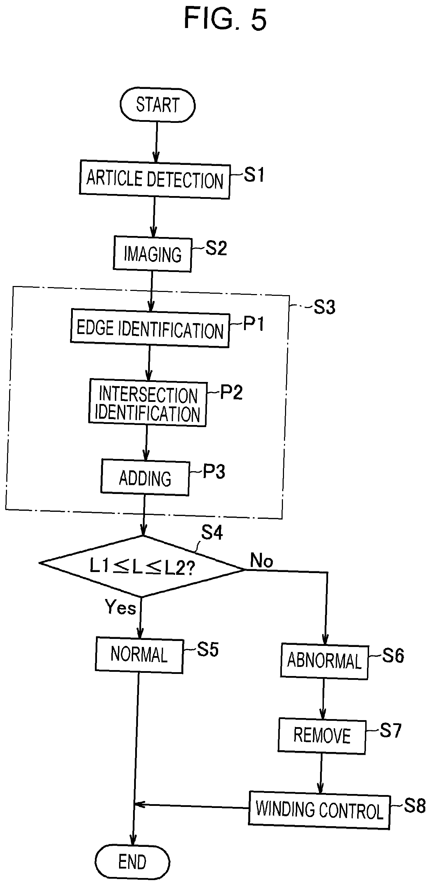

Fig. 4 is a conceptual diagram illustrating the process of measuring the article 2. Fig. 5 is a flowchart of a process of measuring the article 2 performed by the measurement device 6. When the measurement of the article 2 is started, the sensor 24 detects the article 2 that is transported into the transport section 4, and outputs the imaging start signal to the control unit 22 (article detection step S1). Next, in response to the imaging start signal from the sensor 24, the camera 20 captures an image of the end surface 2c at the time when the article 2 to be measured that has been transported to the transport drum 8 is transported to the imaging position P, and transmits the data of the captured image to the image processing unit 26 (imaging step S2).

Next, the image processing unit 26 processes the captured image transmitted from the camera 20 to calculate the outer circumference L of the end surface 2c (image processing step S3). More specifically, first, the image processing unit 26 identifies the outer circumferential edge 30 of the end surface 2c in the captured image (edge identification process P1) . Next, the image processing unit creates an imaginary circle 36 based on the outer circumferential edge 30, creates n straight lines 38 passing through a center point Pc of the imaginary circle 36, and identifies two intersections 40 at which each straight line 38 crosses the outer circumferential edge 30 (intersection identification process P2).

Next, distances C₁, C₂, C₃ ···, Cₖ, Cₖ₊₁, ..., C₂ₙ₋₁, C₂ₙ between the intersections 40 adjacent to each other on the outer circumferential edge 30 are measured. Then, the distances between the intersections (hereinafter generically referred to as distances C) measured along the entire circumference of the outer circumferential edge 30 are added to calculate the sum as the outer circumference L as in the following equation (adding process P3). Outer Circumference L = C1 + C2 + C3 + ... + Ck + Ck+1 + ... + C2n-1 + C2n

Next, the determination unit 28 determines whether or not the outer circumference L calculated in the image processing step S3 is within the predetermined threshold range (greater than or equal to a lower limit L1 and less than or equal to a predetermined upper limit L2) (determination step S4). When the result of the determination performed in the determination step S4 is true (Yes), that is, when L1 ≤ L ≤ L2 is satisfied, the process proceeds to step S5. In step S5, the measurement device 6 issues an output indicating that the outer circumference L of the article 2 is normal, and ends the measurement of the article 2 to be measured.

When the result of the determination performed in the determination step S4 is false (No) and L1 ≤ L ≤ L2 is not satisfied, the process proceeds to step S6. In step S6, the measurement device 6 issues an output, such as a warning, indicating that the outer circumference L of the article 2 is abnormal. Next, in the post-processing section 12, the removing unit 32 removes the article 2 including components (tobacco portion 2a and/or filter portion 2b) of the article 2 for which the abnormal output is issued (removing step S7).

In addition, when the abnormal output is issued for the article 2, the wrapping controller 34 in the wrapping section 10 controls wrapping conditions for the article 2 so that the outer circumference L calculated in the image processing step S3 falls within the above-described threshold range (wrapping control step S8). More specifically, in the wrapping control step S8, the wrapping controller 34 changes the width of a groove or the inside diameter of a cylinder used to form the article 2, and thereby adjusts the amount by which the diameter is reduced when the components of the article 2 are wrapped with wrapping paper or the width of an overlapping portion of the wrapping paper that are bonded together, so that the outer circumference L falls within the threshold range. Thus, every time the sensor 24 detects an article 2, the outer circumference L of the article 2 that is being transported is measured in accordance with the flowchart of the measurement process.

As described above, the measurement device 6 according to the embodiment measures the outer circumference L of each article 2 in real time during transportation in the transport section 4. More specifically, the sum of the above-described distances C between the intersections is calculated as the outer circumference L. By making the number n of the straight lines 38 created as large as possible, the values of the distances C between the intersections can be made as small as possible. Accordingly, in the image processing step S3, the sum of the lengths of the shortest tangents to the outer circumferential edge 30 can be determined as the outer circumference L. Therefore, the outer circumference L of the article 2 can be easily and accurately measured in real time.

More specifically, in response to the imaging start signal output by the sensor 24 in the article detection step S1, the camera 20 captures an image of the end surface 2c at the time when the article 2 to be measured that has been transported into the transport section 4 is transported to the imaging position P. Thus, the articles 2 that are successively transported into the transport section 4 can all be reliably measured.

The articles 2 are held on the outer circumferential surface 18a of the drum shell 18 such that the end surface 2c of each article 2 protrudes outward from the drum shell 18 in the direction of the rotational axis Ra. Therefore, the end surface 2c of each article 2 that is being transported has no dead angle on the transport drum 8 disposed in the transport section 4, so that the article 2 can be reliably measured.

In the determination step S4, the determination unit 28 determines that the article 2 is abnormal when the outer circumference L of the end surface 2c is outside the predetermined threshold range. Accordingly, the possibility that an appropriate measurement cannot be performed due to an oblique orientation of the article 2 during the measurement or a shift in the time of imaging can be eliminated in advance. Therefore, the article 2 can be measured more accuracy and efficiently.

In the removing step S7, the removing unit 32 of the post-processing section 12 removes the article 2 for which an abnormal output is issued. Accordingly, the article 2 that does not meet the quality standards can be prevented from being shipped. In addition, when an abnormal output is issued, in the wrapping control step S8, the wrapping controller 34 of the wrapping section 10 controls the wrapping conditions for the article 2 so that the outer circumference L calculated by the image processing unit 26 falls within the threshold range. Accordingly, the article 2 that meets the quality standards regarding the outer circumference L can be manufactured.

Although the embodiment has been described above, the above-described embodiment is not restrictive, and various modifications are possible without departing from the spirit thereof. For example, in the embodiment, each article 2 can be measured by performing the determinations stepwise as in the flowchart of the measurement process illustrated in Fig. 5. However, the measurement process is not limited to this. For example, the order in which the removing step S7 and the wrapping control step S8 are performed is not necessarily limited to that in the embodiment.

Since each step has operational effects as described above, it is not necessary that all the steps be performed. In addition, the articles measured by the measurement device 6 and the measurement method described above are not limited to the articles 2 having the structure according to the embodiment, and may be rod-shaped articles 2 having various structures. For example, the outer circumference L of a heated segment included in a non-combustion-heating-type smoking article may be measured. In addition, the outer circumference L of each article 2 may be measured by capturing an image of an end surface of the filter portion 2b of the article 2 instead of the tobacco portion 2a.

In addition, in the above-described embodiment, the articles 2 are held in the holding grooves 18b of the drum shell 18 such that the end surface 2c of the tobacco portion 2a of each article 2 protrudes outward from the drum shell 18 in the direction of the rotational axis Ra. Accordingly, the length of each article 2 in the axial direction is greater than the length of the drum shell 18 in the direction of the rotational axis Ra, and the end surface of the article 2 can be easily captured. However, when an image of the end surface of each article 2 can be captured without any trouble, the articles 2 may be held such that the articles 2 do not protrude from the drum shell 18.

The image of each article 2 captured by the camera 20 and the data of the outer circumference L acquired based on the image may be stored and collected in a server and used for various analyses in addition to being used by the measurement device 6 and the measurement method described above. In addition, the above-described measurement device 6 measures the articles 2 by the above-described measurement method while the articles 2 are on the transport drum 8 disposed in the transport section 4. However, the measurement device 6 is not limited to this. When the transport section 4 includes a belt conveyor or the like that transports the articles 2 linearly, the measurement device 6 may measure the articles 2 while the articles 2 are being transported by the belt conveyor.

In the transport section 4, alignment and joining of multiple segments, such as the tobacco portion 2a and the filter portion 2b described above, of each article 2 may be performed in addition to the transportation of the articles 2. In addition, the addition of an external additive, such as flavor, and a physical process for each segment may be performed in the transport section 4.

### Reference Signs List

- 1: manufacturing apparatus
- 2: rod-shaped article
- 2a: tobacco portion (component)
- 2b: filter portion (component)
- 2c: end surface
- 4: transport section
- 6: measurement device
- 8: transport drum
- 10: wrapping section
- 12: post-processing section
- 14: suction source
- 16: cylindrical core
- 18: drum shell
- 18a: outer circumferential surface
- 20: camera
- 24: sensor
- 26: image processing unit
- 28: determination unit
- 30: outer circumferential edge
- 32: removing unit
- 34: wrapping controller
- 36: imaginary circle
- 38: straight line
- 40: intersection
- C: distance between intersections
- L: outer circumference
- P: imaging position
- Pc: center point
- Ra: rotational axis
- S1: article detection step
- S2: imaging step
- S3: image processing step
- S4: determination step
- S7: removing step
- S8: wrapping control step
- P1: edge identification process
- P2: intersection identification process
- P3: adding process

## Claims

1. A rod-shaped-article measurement device that is a measurement device for measuring an outer circumference of a rod-shaped article in a transport section in which the rod-shaped article is transported, the measurement device comprising:
a camera that captures an image of an end surface of the rod-shaped article; and
an image processing unit that calculates the outer circumference by processing the image captured by the camera,
wherein the image processing unit identifies an outer circumferential edge of the end surface in the captured image, creates an imaginary circle based on the outer circumferential edge, creates n straight lines passing through a center point of the imaginary circle, identifies two intersections at which each of the straight lines crosses the outer circumferential edge, measures distances between the intersections adjacent to each other on the outer circumferential edge, and calculates the outer circumference by adding the distances between the intersections measured along an entire circumference of the outer circumferential edge.

2. The rod-shaped-article measurement device according to claim 1, further comprising:
a sensor that detects the rod-shaped article when the rod-shaped article is transported into the transport section and outputs an imaging start signal,
wherein, in response to the imaging start signal, the camera captures the image of the end surface at a time when the rod-shaped article to be measured that has been transported into the transport section is transported to an imaging position.

3. The rod-shaped-article measurement device according to claim 2, wherein the transport section includes a transport drum that transports the rod-shaped article,
wherein the transport drum includes
a cylindrical core in which a suction source is disposed, and
a drum shell that covers the cylindrical core and that is disposed such that the drum shell is rotatable about a rotational axis relative to the cylindrical core, the drum shell having an outer circumferential surface on which the rod-shaped article is held by a suction applied by the suction source such that an axial direction of the rod-shaped article is parallel to the rotational axis, and
wherein the rod-shaped article is held on the outer circumferential surface of the drum shell such that the end surface protrudes outward from the drum shell in a direction of the rotational axis.

4. The rod-shaped-article measurement device according to claim 3, further comprising:
a determination unit that determines whether or not the outer circumference calculated by the image processing unit is within a predetermined threshold range,
wherein the determination unit issues an abnormal output indicating that the rod-shaped article is abnormal when the outer circumference is outside the threshold range.

5. A rod-shaped-article manufacturing apparatus comprising:
the measurement device according to claim 4; and
a post-processing section to which the rod-shaped article transported through the transport section is transported,
wherein the post-processing section is electrically connected to the measurement device and includes a removing unit that removes the rod-shaped article for which the abnormal output has been issued.

6. The rod-shaped-article manufacturing apparatus according to claim 5, further comprising:
a wrapping section in which a component of the rod-shaped article is wrapped with wrapping paper to form the rod-shaped article,
wherein the wrapping section is electrically connected to the measurement device and includes a wrapping controller that controls wrapping conditions of the rod-shaped article so that the outer circumference calculated by the image processing unit falls within the threshold range when the abnormal output is issued.

7. A rod-shaped-article measurement method that is a measurement method for measuring an outer circumference of a rod-shaped article in a transport section in which the rod-shaped article is transported, the measurement method comprising:
an imaging step of capturing an image of an end surface of the rod-shaped article; and
an image processing step of calculating the outer circumference by processing the image captured in the imaging step,
wherein the image processing step includes
an edge identification process of identifying an outer circumferential edge of the end surface in the captured image,
an intersection identification process of creating an imaginary circle based on the outer circumferential edge, creating n straight lines passing through a center point of the imaginary circle, and identifying two intersections at which each of the straight lines crosses the outer circumferential edge, and
an adding process of measuring distances between the intersections adjacent to each other on the outer circumferential edge and calculating the outer circumference by adding the distances between the intersections measured along an entire circumference of the outer circumferential edge.

8. The rod-shaped-article measurement method according to claim 7, further comprising:
an article detection step of detecting the rod-shaped article when the rod-shaped article is transported into the transport section and outputting an imaging start signal,
wherein, in the imaging step, the image of the end surface is captured in response to the imaging start signal at a time when the rod-shaped article to be measured that has been transported into the transport section is transported to an imaging position.

9. The rod-shaped-article measurement method according to claim 8, further comprising:
a determination step of determining whether or not the outer circumference calculated in the image processing step is within a predetermined threshold range,
wherein the determination step includes issuing an abnormal output indicating that the rod-shaped article is abnormal when the outer circumference is outside the threshold range.

10. A rod-shaped-article manufacturing method comprising:
performing the measurement method according to claim 9; and
a removing step of removing the rod-shaped article for which the abnormal output has been issued in a post-processing section to which the rod-shaped article transported through the transport section is transported.

11. The rod-shaped-article manufacturing method according to claim 10, further comprising:
a wrapping control step of controlling wrapping conditions of the rod-shaped article in a wrapping section, in which a component of the rod-shaped article is wrapped into a rod shape to form the rod-shaped article, so that the outer circumference calculated in the image processing step falls within the threshold range when the abnormal output is issued.
